# EUROPEAN PATENT SPECIFICATION

(11) **EP 2 976 671 B1**
(45) Date of publication and mention of the grant of the patent: **11.03.2020**
(21) Application number: 14769033.3
(22) Date of filing: 20.03.2014
(51) Int. Cl.: G02B 26/08, G02B 6/26, G02B 6/35, G01J 3/12

(54) **WAVELENGTH SELECTIVE SWITCH EMPLOYING A LCOS DEVICE AND HAVING REDUCED CROSSTALK**
WELLENLÄNGENSELEKTIVER SCHALTER MIT EINER LCOS-VORRICHTUNG UND MIT REDUZIERTEM ÜBERSPRECHEN
COMMUTATEUR SÉLECTIF DE LONGUEURS D'ONDE EMPLOYANT UN DISPOSITIF LCOS ET OFFRANT UNE RÉDUCTION DE DIAPHONIE

(30) Priority: 20.03.2013 US 201361803528 P
(43) Date of publication of application: 27.01.2016
(73) Proprietor: Nistica, Inc., Bridgewater, NJ 08807 (US)
(72) Inventor: Wagener, Jefferson, L., Morristown, NJ 07960 (US); Ishikawa, Takaaki, Tokyo 135-8512 (JP)
(74) Representative: Blumbach · Zinngrebe Patentanwälte PartG mbB
(86) International application number: PCT/US2014/031320
(87) International publication number: WO 2014/153455

(56) References cited:
- WO-A1-2011/048599
- WO-A1-2012/123715
- WO-A2-2008/057347
- JP-A- 2008 139 477
- JP-A- 2010 026 427
- US-A1- 2011 033 151
- US-A1- 2012 002 917

## Description

### Background

Optical networks use Wavelength Selective Switches (WSS) to dynamically route optical wavelength signals from a source to a destination. WSS devices often rely on wavelength manipulation elements such as liquid crystal on silicon (LCoS) devices or micro-electromechanical (MEMS) mirror arrays to perform the routing.

LCoS devices include a liquid crystal material sandwiched between a transparent glass layer having a transparent electrode, and a silicon substrate divided into a two-dimensional array of individually addressable pixels. Each pixel is individually drivable by a voltage signal to provide a local phase change to an optical signal, thereby providing a two-dimensional array of phase manipulating regions. Manipulation of individual spectral components is possible once an optical signal has been spatially separated by a diffractive element such as a diffraction grating. The spatial separation of spectral components is directed onto predetermined regions of the LCoS device, which can be independently manipulated by driving the corresponding pixels in a predetermined manner.

Although wavelength selective switches that employ LCoS devices have some very attractive performance characteristics, they also suffer from undesired optical crosstalk, which refers to un-desired power coupled from an input port to an output port at a particular wavelength.

US 2011/0033151 A1 teaches a wavelength selective switch for channel routing with equalization and blocking applications. Input signals are converted to light beams having predefined polarizations. The beams are laterally expanded, and then undergo spatial dispersion in the beam expansion plane. The different wavelength components are directed through a polarization rotation device. Each beam is passed into a pixilated beam steering array for directing each wavelength to a desired output port. The beam steering device can be a MEMS-based or Liquid crystal-based, or an LCOS array.

JP 2008 139477 A shows an optical switch with a collimator part, a spectroscope part, a focusing part and a turning mirror. The optical switch is further provided with mirror control parts which control the angle of the reflection face of the turning mirror. The mirror control parts switch the optical coupling of the reflected light beam for every wavelength with an optical output port to an on or off state. Further, the mirror control parts determine the position of the optical output port to which the reflected light beam for every wavelength is output.

### Summary

In accordance to one aspect of the invention, an optical device is provided in which crosstalk due to scattering is reduced. The optical device includes an optical port array having at least one optical input for receiving an optical beam and at least one optical output. The input and outputs extend along a common axis. A dispersion element receives the optical beam from the optical input and spatially separates the optical beam into a plurality of wavelength components. A focusing element focuses the plurality of wavelength components and a programmable optical phase modulator receives the focused plurality of wavelength components. The modulator is configured to steer the wavelength components to a selected one of the optical outputs. The programmable optical phase modulator is oriented with respect to the optical port array so that an axis along which the optical beam is steered is non-coincident with the common axis along which the input and outputs extend.

### Brief Description of the Drawings

FIGS. 1A and 1B are top and side views respectively of one example of a simplified optical device such as a free-space wavelength selective switch (WSS) that may be used in conjunction with embodiments of the present invention.
FIG. 2 is a front view of the LCoS device of FIG. 1 extending in the x-y plane.
FIG. 3 shows an example of a periodic, stepped phase shift profile that may be produced across a region of a LCoS device in the y-axis.
FIGs. 4 and 5 are front views taken along line A-A in FIG. 1B of the port array.
FIG. 6 is a side view of one example of a simplified optical device such as a free-space wavelength selective switch (WSS) in which crosstalk is reduced.
FIG. 7 shows an alternative embodiment of the optical device shown in FIG. 6.

### Detailed Description

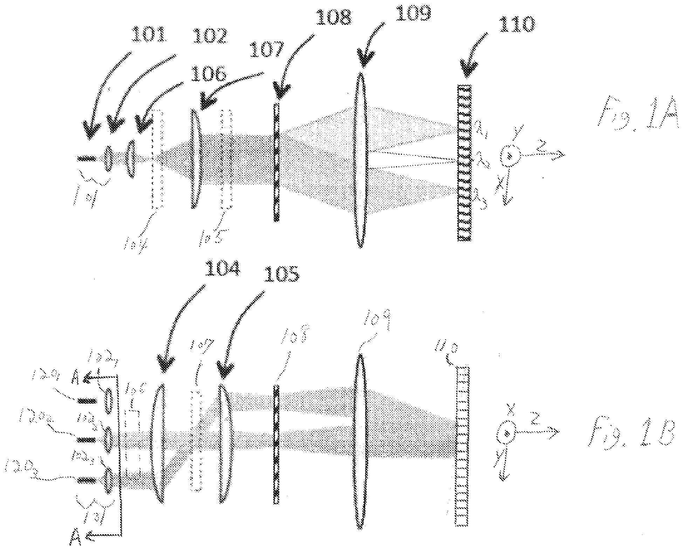

FIGS. 1A and 1B are top and side views respectively of one example of a simplified optical device such as a free-space WSS 100 that may be used in conjunction with embodiments of the present invention. Light is input and output to the WSS 100 through optical waveguides such as optical fibers which serve as input and output ports. As best seen in FIG. 1B, a fiber collimator array 101 may comprise a plurality of individual fibers 120₁, 120₂ and 120₃ respectively coupled to collimators 102₁, 102₂ and 102₃. Light from one or more of the fibers 120 is converted to a free-space beam by the collimators 102. The light exiting from port array 101 is parallel to the z-axis. While the port array 101 only shows three optical fiber/collimator pairs in FIG. 1B, more generally any suitable number of optical fiber/collimator pairs may be employed.

A pair of telescopes or optical beam expanders magnifies the free space light beams from the port array 101. A first telescope or beam expander is formed from optical elements 106 and 107 and a second telescope or beam expander is formed from optical elements 104 and 105.

In FIGs. 1A and 1B, optical elements which affect the light in two axes are illustrated with solid lines as bi-convex optics in both views. On the other hand, optical elements which only affect the light in one axis are illustrated with solid lines as plano-convex lenses in the axis that is affected. The optical elements which only affect light in one axis are also illustrated by dashed lines in the axis which they do not affect. For instance, in FIGs. 1A and 1B the optical elements 102, 108, 109 and 110 are depicted with solid lines in both figures. On the other hand, optical elements 106 and 107 are depicted with solid lines in FIG. 1A (since they have focusing power along the y-axis) and with dashed lines in FIG. 1B (since they leave the beams unaffected along the x-axis). Optical elements 104 and 105 are depicted with solid lines in FIG. 1B (since they have focusing power along the x-axis) and with dashed lines in FIG. 1A (since they leave the beams unaffected in the y-axis).

Each telescope may be created with different magnification factors for the x and y directions. For instance, the magnification of the telescope formed from optical elements 104 and 105, which magnifies the light in the x-direction, may be less than the magnification of the telescope formed from optical elements 106 and 107, which magnifies the light in the y-direction.

The pair of telescopes magnifies the light beams from the port array 101 and optically couples them to a wavelength dispersion element 108 (e.g., a diffraction grating or prism), which separates the free space light beams into their constituent wavelengths or channels. The wavelength dispersion element 108 acts to disperse light in different directions on an x-y plane according to its wavelength. The light from the dispersion element is directed to beam focusing optics 109.

Beam focusing optics 109 couple the wavelength components from the wavelength dispersion element 108 to a programmable optical phase modulator, which may be, for example, a liquid crystal-based phase modulator such as a LCoS device 110. The wavelength components are dispersed along the x-axis, which is referred to as the wavelength dispersion direction or axis. Accordingly, each wavelength component of a given wavelength is focused on an array of pixels extending in the y-direction. By way of example, and not by way of limitation, three such wavelength components having center wavelengths denoted λ₁, λ₂ and λ₃ are shown in FIG. 1A being focused on the LCoS device 110 along the wavelength dispersion axis (x-axis).

As best seen in FIG. 1B, after reflection from the LCoS device 110, each wavelength component can be coupled back through the beam focusing optics 109, wavelength dispersion element 108 and optical elements 106 and 107 to a selected fiber in the port array 101.

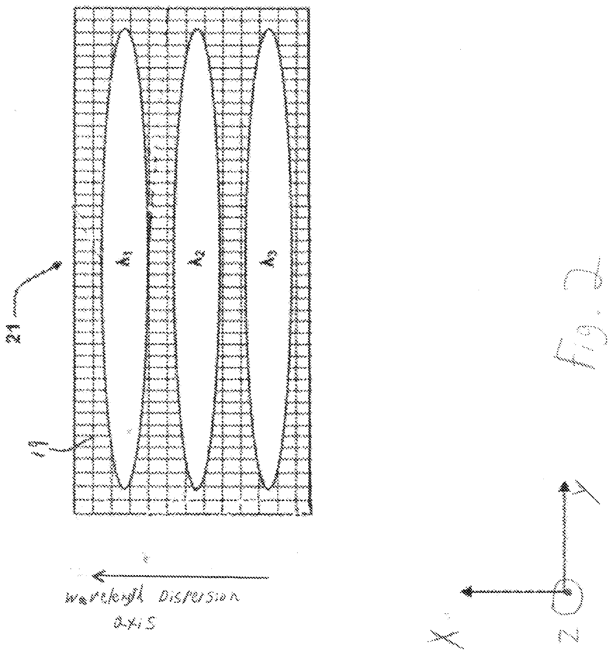

Fig. 2 is a front view of the LCoS device 110 extending in the x-y plane.

The three wavelength components λ₁, λ₂ and λ₃ are spatially separated along the wavelength dispersion axis (x-axis). As will be discussed below, appropriate manipulation of the pixels 19 in the y-axis allows selective independent steering of each wavelength component to a selected output fiber.

A programmable optical phase modulator such as a LCoS device produces a phase shift at a given pixel location in a pixel array which is determined programmatically. Such a modulator can be used in multiple ways, forming virtual lenses, prisms or tilted mirrors among other items. Due to the limited thickness and actuation of a LCoS device, the total phase shift that can be achieved at any given location is limited. This limitation can be circumvented in a LCoS device by application of the segmentation technique similar to that used to form a Fresnel lens by compressing the surface power of a lens into a piano surface. Specifically, the total phase shift desired is usually modulo 2*π* at the wavelength of interest. The resultant phase is then always less than 2*π.* Unfortunately, this segmentation technique introduces scattering of light in directions that an un-segmented pattern would not produce. This scattered light is a major reason the crosstalk is naturally higher in an LCoS WSS.

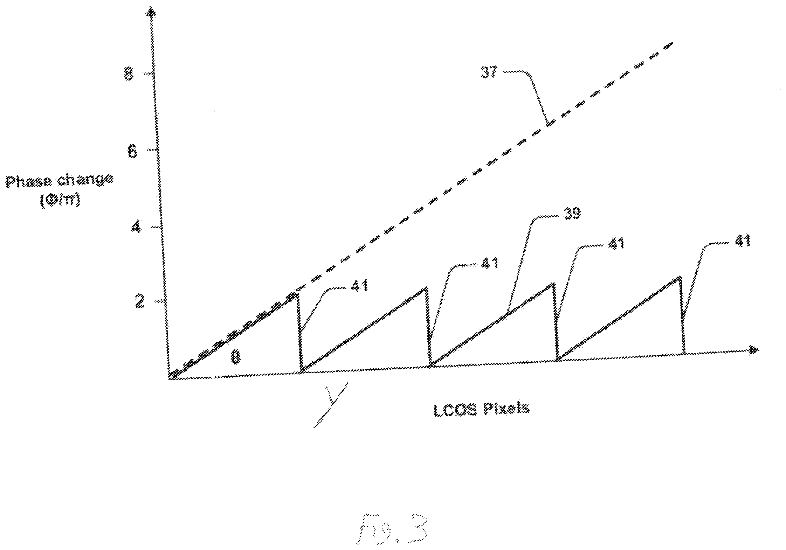

Turning to FIG. 3, there is illustrated an example of a periodic, stepped phase shift profile 39 that may be produced across a region of a LCoS device 21 in the y-axis. The periodic, stepped phase shift profile 39 produces a cumulative phase profile 37. The cumulative steering profile 37 is produced by driving each pixel 19 with a predetermined voltage to provide a desired phase change. As there is a direct relationship between voltage and phase, and a direct relationship between phase and steering angle, a look-up table or the like can be generated which relates the required voltage drive signal with a desired steering angle. The periodic nature of phase is utilized to reduce the required drive voltage. Therefore a periodic, stepped voltage signal will produce the periodic, stepped phase shift profile 39, which in turn produces the cumulative phase profile 37, where phase resets 41 occur at multiples of 2*π* radians. When acting on an incident wavelength component, the phase profile 37 produces a steering angle proportional to or equal to θ. Accordingly, by proper adjustment of the periodic, stepped phase shift profile the wavelength components can be selectively directed to a desired one of the optical fibers.

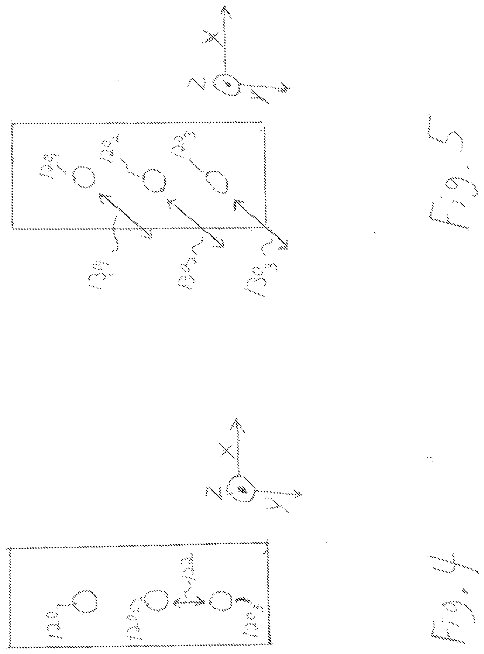

FIG. 4 is a front view taken along line A-A in FIG. 1B of port array 101. As shown the optical fibers 1201, 1202, 1203, ... extend in a 1xN configuration along the y-axis. When the LCoS device 110 steers a light beam from one optical fiber (serving as an input port to the WSS 100) to another optical fiber (serving as an output port to the WSS 100) such as from the optical fiber 1203 to the optical fiber 1202, for example, the beam is steered along a single direction (the y-axis), either in a positive or negative direction, as indicated by the arrows 122 in FIG. 4. In other words, the steering axis is coincident with the optical port axis along which the optical fibers 1201, 1202, 1203... are aligned. That is, the steering direction is not a function of the optical fiber or port to which the beam is being steered.

As previously mentioned, the scattered light that gives rise to crosstalk is preferentially aligned with the direction in which the beam is steered. That is, in FIG. 4 light is scattered along that axis indicated by arrows 122. As a result the scattered light is largely aligned with the ports, thereby causing the undesired crosstalk. This crosstalk can be reduced by rotating the beam steering axis (which is also the scattering axis along which light is scattered) so that it is no longer coincident with the optical port axis. Such an arrangement is shown in FIG. 5, in which the beam steering axis along which the light beam is steered to ports 1201, 1202, 1203... is represented by arrows 1301, 1302, 1303..., respectively. As a consequence, as the beam is steered to any particular port, scattered light will not also be scattered to that port.

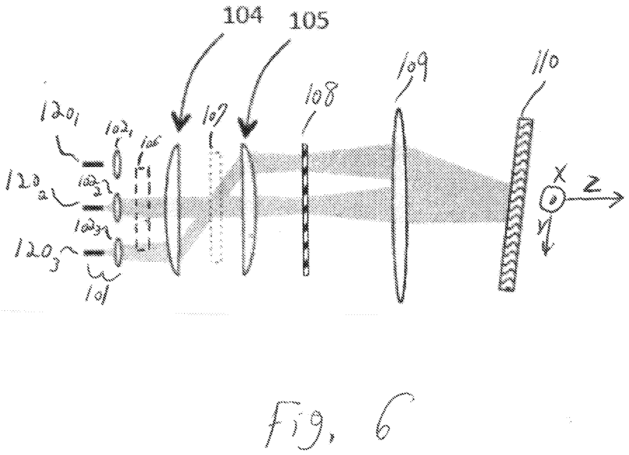

One way to accomplish this misalignment between the beam steering axis and the optical port axis is shown in FIG. 6, which is a side view of one example of a free-space WSS similar to the WSS shown in FIG. 1B. In FIGs. 1B and 6, like elements are denoted by like reference numerals. As shown, the plane in which the LCoS device 110 extends is no longer orthogonal to the axis along which the light propagates from the port array 101. That is, in the particular example of FIG. 6, the LOCS 110 is tilted about the x-axis so that it is no longer in the x-y plane and thus is no longer orthogonal to the z-axis along which the light propagates from the port array 101. Stated differently, a skewed angle is formed between the z-axis and a direction in the plane of the modulator perpendicular to the wavelength dispersion axis (i.e., the x-axis in FIG. 6).

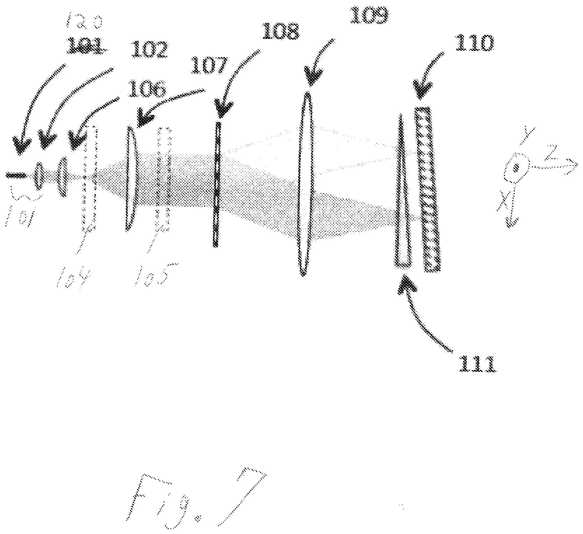

Because of the skewed angle that is employed, the distance between the beam focusing optics 109 and the LCoS device 110 will be different along different portions of the LCoS device 110. In order to properly focus the light beam on any portion of the LCoS device 110 an optional focus correction element can be placed in the optical path of the system. For instance, as shown in FIG. 7, a focus correction element such as a low angle wedge prism 111 can be placed between the beam focusing optics 109 and the LCoS device 110.

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. An optical device (100), comprising:
- an optical port array (101) having at least one optical input (120₁, 120₂, 120₃) for receiving an optical beam and at least one optical output (120₁, 120₂, 120₃), the input and outputs extending along a common axis (y-axis);
- a dispersion element (108) receiving the optical beam from the at least one optical input (120₁, 120₂, 120₃) and spatially separating the optical beam into a plurality of wavelength components;
- a focusing element (109) for focusing the plurality of wavelength components; and
- a programmable optical phase modulator (110) for receiving the focused plurality of wavelength components, the modulator (110) being configured to steer the wavelength components to a selected one of the optical outputs (120₁, 120₂, 120₃),
**characterized in that** the programmable optical phase modulator (110) being oriented with respect to the optical port array (101) so that an axis along which the optical beam is steered is non-coincident with the common axis (y-axis) along which the input (120₁, 120₂, 120₃) and outputs (120₁, 120₂, 120₃) extend.

2. The optical device (100) of claim 1 wherein a plane in which the programmable optical phase modulator (110) extends forms a non-zero angle with a plane in which the common axis extends.

3. The optical device (100) of claim 1 wherein the programmable optical phase modulator has a periodic, stepped phase shift profile or includes a liquid crystal-based phase modulator (110).

4. The optical device (100) of claim 3 wherein the liquid crystal-based phase modulator is a LCoS device (110).

5. The optical device (100) of claim 1 wherein the dispersive element (108) is selected from the group consisting of a diffraction grating and a prism.

6. The optical device (100) of claim 1 further comprising an optical system (104, 105) for magnifying the optical beam received from the optical port array (101) and directing the magnified optical beam to the dispersion element (108).

7. The optical device (100) of claim 6 wherein the optical system has a first magnification factor in a first direction and a second magnification factor in a second direction orthogonal to the first direction, the first magnification factor being different from the second magnification factor.

8. The optical device (100) of claim 7 wherein the first direction is parallel to a wavelength dispersion axis along which the optical beam is spatially separated, the first magnification factor being less than the second magnification factor.

9. A method for directing wavelength components of an optical beam from an input port (120₁, 120₂, 120₃) of a port array (101) to at least one output port (120₁, 120₂, 120₃) of the port array (101), comprising:
- receiving the optical beam at the input port (120₁, 120₂, 120₃) ;
- spatially separating the wavelength components of the optical beam;
- focusing the spatially separated wavelength components onto a programmable optical phase modulator (110) so that the wavelength components are spatially separated along a wavelength dispersion axis of the modulator (110), the modulator (110) receiving the wavelength components so that a skewed angle is formed between a first direction in which the wavelength components propagate after being collimated by the port array (101) and a second direction in the plane of the modulator (110) perpendicular to the wavelength dispersion axis; and
- adjusting a phase shift profile of the modulator (110) along the second direction to selectively direct individual ones of the wavelength components to an output port (120₁, 120₂, 120₃) .

10. The method of claim 9 wherein the phase shift profile is a periodic, stepped phase shift profile.

11. The method of claim 9 wherein the programmable optical phase modulator includes a liquid crystal-based phase modulator (110).

12. The method of claim 11 wherein the liquid crystal-based phase modulator is a LCoS device (110).

13. The method of claim 9 further comprising magnifying the optical beam before spatially separating the wavelength components of the optical beam.

14. The method of claim 13 further comprising magnifying the optical beam in a first direction and a second direction orthogonal to the first direction.

15. The method of claim 14 wherein the first direction is parallel to the wavelength dispersion axis along which the optical beam is spatially separated, the magnification in the first direction being less than the magnification in the second direction.

## Patentansprüche

1. Optische Vorrichtung (100), umfassend:
- ein optisches Port-Array (101) mit mindestens einem optischen Eingang (120₁, 120₂, 120₃) zum Empfangen eines optischen Strahls und mindestens einem optischen Ausgang (120₁, 120₂, 120₃), wobei sich der Eingang und die Ausgänge entlang einer gemeinsamen Achse (y-Achse) erstrecken;
- ein Dispersionselement (108), das den optischen Strahl von dem mindestens einen optischen Eingang (120₁, 120₂, 120₃) empfängt und den optischen Strahl räumlich in eine Vielzahl von Wellenlängenkomponenten trennt;
- ein Fokussierelement (109) zum Fokussieren der Vielzahl von Wellenlängenkomponenten; und
- einen programmierbaren optischen Phasenmodulator (110) zum Empfangen der fokussierten Vielzahl von Wellenlängenkomponenten, wobei der Modulator (110) konfiguriert ist, um die Wellenlängenkomponenten auf einen ausgewählten der optischen Ausgänge (120₁, 120₂, 120₃) zu lenken,
**dadurch gekennzeichnet, dass** der programmierbare optische Phasenmodulator (110) in Bezug auf das optische Port-Array (101) so ausgerichtet ist, dass eine Achse, entlang der der optische Strahl gelenkt wird, nicht mit der gemeinsamen Achse (y-Achse) übereinstimmt,
entlang der sich der Eingang (120₁, 120₂, 120₃) und die Ausgänge (120₁, 120₂,120₃) erstrecken.

2. Optische Vorrichtung (100) nach Anspruch 1, wobei eine Ebene, in der sich der programmierbare optische Phasenmodulator (110) erstreckt, einen Winkel von ungleich Null mit einer Ebene bildet, in der sich die gemeinsame Achse erstreckt.

3. Optische Vorrichtung (100) nach Anspruch 1, wobei der programmierbare optische Phasenmodulator ein periodisches, abgestuftes Phasenverschiebungsprofil aufweist oder einen auf Flüssigkristallen basierenden Phasenmodulator (110) einschließt.

4. Optische Vorrichtung (100) nach Anspruch 3, wobei der auf Flüssigkristallen basierende Phasenmodulator eine LCoS-Vorrichtung (110) ist.

5. Optische Vorrichtung (100) nach Anspruch 1, wobei das dispersive Element (108) ausgewählt ist aus der Gruppe bestehend aus einem Beugungsgitter und einem Prisma.

6. Optische Vorrichtung (100) nach Anspruch 1, ferner umfassend ein optisches System (104, 105) zum Vergrößern des von dem optischen Port-Array (101) empfangenen optischen Strahls und zum Richten des vergrößerten optischen Strahls auf das Dispersionselement (108).

7. Optische Vorrichtung (100) nach Anspruch 6, wobei das optische System einen ersten Vergrößerungsfaktor in einer ersten Richtung und einen zweiten Vergrößerungsfaktor in einer zweiten Richtung orthogonal zur ersten Richtung aufweist, wobei sich der erste Vergrößerungsfaktor von dem zweiten Vergrößerungsfaktor unterscheidet.

8. Optische Vorrichtung (100) nach Anspruch 7, wobei die erste Richtung parallel zu einer Wellenlängendispersionsachse verläuft, entlang der der optische Strahl räumlich getrennt ist, wobei der erste Vergrößerungsfaktor kleiner als der zweite Vergrößerungsfaktor ist.

9. Verfahren zum Richten von Wellenlängenkomponenten eines optischen Strahls von einem Eingangsport (120₁, 120₂, 120₃) eines Port-Arrays (101) auf mindestens einen Ausgangsport (120₁, 120₂, 120₃) des Port-Arrays (101), umfassend:
- Empfangen des optischen Strahls an dem Eingangsport (120₁, 120₂, 120₃);
- räumliches Trennen der Wellenlängenkomponenten des optischen Strahls;
- Fokussieren der räumlich getrennten Wellenlängenkomponenten auf einen programmierbaren optischen Phasenmodulator (110), sodass die Wellenlängenkomponenten räumlich entlang einer Wellenlängendispersionsachse des Modulators (110) getrennt sind, wobei der Modulator (110) die Wellenlängenkomponenten empfängt, sodass ein schräger Winkel zwischen einer ersten Richtung, in der sich die Wellenlängenkomponenten nach dem Kollimieren durch das Port-Array (101) ausbreiten, und einer zweiten Richtung in der Ebene des Modulators (110) senkrecht zu der Wellenlängendispersionsachse gebildet wird; und
- Anpassen eines Phasenverschiebungsprofils des Modulators (110) entlang der zweiten Richtung, um einzelne der Wellenlängenkomponenten selektiv auf einen Ausgangsport (120₁, 120₂, 120₃) zu richten.

10. Verfahren nach Anspruch 9, wobei das Phasenverschiebungsprofil ein periodisches, abgestuftes Phasenverschiebungsprofil ist.

11. Verfahren nach Anspruch 9, wobei der programmierbare optische Phasenmodulator einen auf Flüssigkristallen basierenden Phasenmodulator (110) einschließt.

12. Verfahren nach Anspruch 11, wobei der auf Flüssigkristallen basierende Phasenmodulator eine LCoS-Vorrichtung (110) ist.

13. Verfahren nach Anspruch 9, ferner umfassend das Vergrößern des optischen Strahls, bevor die Wellenlängenkomponenten des optischen Strahls räumlich getrennt werden.

14. Verfahren nach Anspruch 13, ferner umfassend das Vergrößern des optischen Strahls in einer ersten Richtung und einer zweiten Richtung orthogonal zu der ersten Richtung.

15. Verfahren nach Anspruch 14, wobei die erste Richtung parallel zu der Wellenlängendispersionsachse verläuft, entlang der der optische Strahl räumlich getrennt ist, wobei die Vergrößerung in der ersten Richtung kleiner ist als die Vergrößerung in der zweiten Richtung.

## Revendications

1. Dispositif optique (100), comprenant :
- une série de ports optiques (101) ayant au moins une entrée optique (120₁, 120₂, 120₃) pour recevoir un faisceau optique et au moins une sortie optique (120₁, 120₂, 120₃), l'entrée et les sorties s'étendant le long d'un axe commun (axe y) ;
- un élément de dispersion (108) recevant le faisceau optique depuis l'au moins une entrée optique (120₁, 120₂, 120₃) et séparant spatialement le faisceau optique en une pluralité de composantes de longueur d'onde ;
- un élément de focalisation (109) pour focaliser la pluralité de composantes de longueur d'onde ; et
- un modulateur de phase optique programmable (110) pour recevoir la pluralité focalisée de composantes de longueur d'onde, le modulateur (110) étant configuré pour orienter les composantes de longueur d'onde vers l'une sélectionnée des sorties optiques (120₁, 120₂, 120₃),
**caractérisé en ce que** le modulateur de phase optique programmable (110) est orienté par rapport à la série de ports optiques (101) de sorte qu'un axe le long duquel le faisceau optique est orienté est non coïncident avec l'axe commun (axe y)
le long duquel l'entrée (120₁, 120₂, 120₃) et les sorties (120₁, 120₂, 120₃) s'étendent.

2. Dispositif optique (100) selon la revendication 1 dans lequel un plan dans lequel le modulateur de phase optique programmable (110) s'étend forme un angle différent de zéro avec un plan dans lequel l'axe commun s'étend.

3. Dispositif optique (100) selon la revendication 1 dans lequel le modulateur de phase optique programmable a un profil de déphasage étagé périodique ou inclut un modulateur de phase à base de cristaux liquides (110).

4. Dispositif optique (100) selon la revendication 3 dans lequel le modulateur de phase à base de cristaux liquides est un dispositif LCoS (110).

5. Dispositif optique (100) selon la revendication 1 dans lequel l'élément de dispersion (108) est choisi dans le groupe constitué d'un réseau de diffraction et d'un prisme.

6. Dispositif optique (100) selon la revendication 1 comprenant en outre un système optique (104, 105) de grossissement du faisceau optique reçu de la série de ports optiques (101) et d'orientation du faisceau optique grossi vers l'élément de dispersion (108).

7. Dispositif optique (100) selon la revendication 6 dans lequel le système optique a un premier facteur de grossissement dans une première direction et un deuxième facteur de grossissement dans une deuxième direction orthogonale à la première direction, le premier facteur de grossissement étant différent du deuxième facteur de grossissement.

8. Dispositif optique (100) selon la revendication 7 dans lequel la première direction est parallèle à un axe de dispersion de longueur d'onde le long duquel le faisceau optique est spatialement séparé, le premier facteur de grossissement étant inférieur au deuxième facteur de grossissement.

9. Procédé pour orienter des composantes de longueur d'onde d'un faisceau optique depuis un port d'entrée (120₁, 120₂, 120₃) d'une série de ports (101) vers au moins un port de sortie (120₁, 120₂, 120₃) de la série de ports (101), comprenant:
- la réception du faisceau optique au niveau du port d'entrée (120₁, 120₂, 120₃) ;
- la séparation spatiale des composantes de longueur d'onde du faisceau optique ;
- la focalisation des composantes de longueur d'onde spatialement séparées sur un modulateur de phase optique programmable (110) de sorte que les composantes de longueur d'onde sont spatialement séparées le long d'un axe de dispersion de longueur d'onde du modulateur (110), le modulateur (110) recevant les composantes de longueur d'onde de sorte qu'un angle oblique est formé entre une première direction dans laquelle les composantes de longueur d'onde se propagent après avoir été collimatées par la série de ports (101) et une deuxième direction dans le plan du modulateur (110) perpendiculaire à l'axe de dispersion de longueur d'onde ; et
- l'ajustement d'un profil de déphasage du modulateur (110) le long de la deuxième direction pour orienter sélectivement des individuelles parmi les composantes de longueur d'onde vers un port de sortie (120₁, 120₂, 120₃).

10. Procédé selon la revendication 9 dans lequel le profil de déphasage est un profil de déphasage étagé périodique.

11. Procédé selon la revendication 9 dans lequel le modulateur de phase optique programmable inclut un modulateur de phase à base de cristaux liquides (110).

12. Procédé selon la revendication 11 dans lequel le modulateur de phase à base de cristaux liquides est un dispositif LCoS (110).

13. Procédé selon la revendication 9 comprenant en outre le grossissement du faisceau optique avant séparation spatiale des composantes de longueur d'onde du faisceau optique.

14. Procédé selon la revendication 13 comprenant en outre le grossissement du faisceau optique dans une première direction et une deuxième direction orthogonale à la première direction.

15. Procédé selon la revendication 14 dans lequel la première direction est parallèle à l'axe de dispersion de longueur d'onde le long duquel le faisceau optique est spatialement séparé, le grossissement dans la première direction étant inférieur au grossissement dans la deuxième direction.
